Europäisches Patentamt

European Patent Office

Office européen des brevets

(11) Veröffentlichungsnummer: **0 195 333 B1**

## EUROPÄISCHE PATENTSCHRIFT

(45) Veröffentlichungstag der Patentschrift: **18.12.91**

(51) Int. Cl.⁵: **C08F 10/10**, C08F 4/14

(21) Anmeldenummer: **86103107.8**

(22) Anmeldetag: **08.03.86**

(54) **Katalysatorsysteme für die kationische Polymerisation von Isobutylen.**

(30) Priorität: **15.03.85 DE 3509272**

(43) Veröffentlichungstag der Anmeldung:
**24.09.86 Patentblatt 86/39**

(45) Bekanntmachung des Hinweises auf die
Patenterteilung:
**18.12.91 Patentblatt 91/51**

(84) Benannte Vertragsstaaten:
**AT BE DE FR GB NL**

(56) Entgegenhaltungen:
**DE-C- 738 428**
**FR-A- 1 441 610**
**FR-A- 2 117 121**
**US-A- 3 833 678**

(73) Patentinhaber: **BASF Aktiengesellschaft**
**Carl-Bosch-Strasse 38**
**W-6700 Ludwigshafen(DE)**

(72) Erfinder: **Bronstert, Klaus, Dr.**
**Gartenstrasse 26**
**W-6719 Carlsberg(DE)**
Erfinder: **Hochstein, Waldhelm, Dr.**
**Am Wurmberg 4**
**W-6713 Freinsheim(DE)**
Erfinder: **Mohr, Heinrich, Dr.**
**Carostrasse 41**
**W-6710 Frankenthal(DE)**
Erfinder: **Sandrock, Gerhard, Dr.**
**Albrecht-Duerer-Ring 36c**
**W-6710 Frankenthal(DE)**
Erfinder: **Vogel, Hans-Henning, Dr.**
**Hans-Purrmann-Strasse 7 c**
**W-6710 Frankenthal(DE)**
Erfinder: **Rath, Hans Peter, Dr.**
**Friedhofstrasse 7**
**W-6718 Gruenstadt(DE)**

## Beschreibung

Die Erfindung betrifft ein Verfahren zur Herstellung von Isobutylenpolymerisaten durch Homopolymerisation von Isobutylen oder Copolymerisation von Isobutylen mit Isobutylen copolymerisierbaren olefinisch ungesättigten Verbindungen in flüssiger Phase in einer Polymerisationszone in der ein Druck Von 0,2 bis 20 bar und eine Temperatur von -130 bis +60°C herrscht in Gegenwart von 0,01 bis 20 mMol, bezogen auf ein Mol des eingesetzten Monomeren, eines Borhalogenidkatalysators und gegebenenfalls eines Polymerisationsbeschleunigers, wobei das molare Verhältnis von Borhalogenid zum Cokatalysator und gegebenenfalls zum Polymerisationsbeschleuniger jeweils 0,5 bis 200 ist, sowie in Gegenwart von 0 bis 90 Gew.%, bezogen auf das Gewicht des Gemisches aus Monomer und Lösungsmittel, eines unter Reaktionsbedingungen inerten Lösungsmittels unter Abführung der Polymerisationswärme durch Kühlung.

Bei derartigen Polymerisationsverfahren mit Hilfe von Borhalogenidkatalysatoren ist es erforderlich, in Gegenwart eines Cokatalysators sowie gegebenenfalls zusätzlich in Gegenwart reaktionsbeschleunigender Verbindungen zu arbeiten, wobei außer einer Erhöhung des Molekulargewichts der entstehenden Polymerisate eine Beschleunigung des Reaktionsablaufs und eine Verringerung der Katalysatormenge bewirkt werden soll. Es ist ferner von technischem Interesse, die Polymerisation des Isobutylens in flüssiger Phase unter Abführung der Polymerisationswärme durch Kühlung durchzuführen.

Es ist bereits bekannt, zur Erfüllung dieser Erfordernisse die Polymerisation des Isobutylens mit einem Borhalogenidkatalysator in Gegenwart eines Cokatalysators zu katalysieren, und zur Beschleunigung der Reaktion in Anwesenheit einer reaktionsbeschleunigenden Verbindung zu arbeiten (vgl. Monographie von H. Güterbock, "Polyisobutylen und Isobutylen-Mischpolymerisate", Springer-Verlag, Berlin/Göttingen/Heidelberg, 1959. Seiten 87 bis 91 sowie GB-Patente 828 367 und 525 542). Als Cokatalysatoren kommen insbesondere Orthocarbonsäureester wie Orthoameisensäuretriethylester, Carbonsäureamide wie Dimethylacetamid, Aminoverbindungen wie Dimethylanilin oder methylsubstituierte Chinoline oder Formaldehyd, als Polymerisationsbeschleuniger primäre und sekundäre Alkohole wie Propanole, Butanole, Benzylalkohol etc. dabei in Betracht (vgl. GB-Patente 1 361 429 und 1 363 310). Bei den bekannten Verfahren wird meist in inerten Lösungsmitteln, z.B. in Ethylen, polymerisiert, wobei die Polymerisationswärme durch Siedekühlung abgeführt werden kann (vgl. z.B. US-Patent 4 391 959).

Die bekannten Verfahren weisen aber den Nachteil auf, daß nur ein sehr kleiner Teil des eingesetzten Bortrifluorids zur Polymerisation führt und die zugesetzten "Beschleuniger" stark molekulargewichtsregelnd wirken. So findet man mit zunehmendem Trifluoridbedarf im allgemeinen auch einen höheren Fluorgehalt des entstandenen Polymeren. Dieses z. Teil thermisch labile Fluor bringt bei der Weiterverarbeitung vor allem Korrosionsprobleme.

Der Erfindung lag daher die Aufgabe zugrunde, ein Katalysatorsystem aufzufinden, das durch eine geringe Reglerwirkung in Bezug auf das erhaltene Molekulargewicht des Isobutylenpolymerisats gekennzeichnet ist und zu Polymerisation mit hohen Molekulargewichten bei geringem Borhalogenidverbrauch führt.

Diese Aufgaben werden erfindungsgemäß durch die Verfahren gemäß den Patentansprüchen 1 bis 3 gelöst.

Verfahren zur Herstellung von Isobutylenpolymerisaten durch Homo- und Copolymerisation von Isobutylen sind an sich seit geraumer Zeit bekannt und beispielsweise in den eingangs zitierten Literaturstellen ausführlich beschrieben. Als mit Isobutylen copolymerisierbaren olefinisch ungesättigten Verbindungen kommen insbesondere Buten-1, Buten-2, 4-Methylpenten-1, Styrol, alkylsubstituierte Styrole, Propylen und Isopren in Betracht. Eine ausführliche Aufzählung der mit Isobutylen in Gegenwart von Borhalogenidkatalysator copolymerisierbaren Verbindungen ist in der eingangs zitierten Monographie von H. Güterbock enthalten, so daß sich eine weitere Beschreibung erübrigt. Die gegebenenfalls erhaltenen Copolymerisate des Isobutylens enthalten gewöhnlich 0,1 bis 25 Gew.% Comonomere einpolymerisiert, es können aber auch größere Mengen an Comonomeren im Copolymerisat enthalten sein. Bevorzugt ist das erfindungsgemäße Verfahren auf die Homopolymerisation von Isobutylen beschränkt. Die Homopolymerisate weisen die Formel

$$\left[ -CH_2-\underset{\underset{CH_3}{|}}{\overset{\overset{CH_3}{|}}{C}}- \right]_n$$

auf, wobei n 9 bis 9000, bevorzugt 13 bis 4000 ist. Die obigen Polyisobutylene mit Molgewichten aus dem Gewichtsmittel $\overline{M}_w$ von 500 bis 480.000, bevorzugt 800 bis 300.000, insbesondere 500 bis 5000, bestimmt durch Viskositätsmessungen gemäß DIN 51 562 oder ASTM-D 1601 sind bei Raumtemperatur, je nach Molekulargewicht, ölig, viskos oder gummielastisch und haben eine Dichte von 0,83 bis 0,93 g/cm³ nach DIN 53 479.

Sie finden vielfältige Verwendungen als Dichtungsmassen, Haftkleber oder als Viskositätsverbesserer sowie Vorprodukt zu Schmieröladditiven in Motorölen.

Die Homo- oder Copolymerisation des Isobutylens wird in flüssiger Phase, vorteilhaft unter Luftausschluß, vorgenommen. Hierzu wird entweder in Lösung in Gegenwart eines geeigneten Lösungsmittels oder in flüssigem Isobutylen selbst polymerisiert, wobei überschüssiges Isobutylen als Lösungsmittel wirkt. Im letzteren Fall ist zur Aufrechterhaltung der flüssigen Phase gegebenenfalls die Verwendung eines Drucks bis zu 20 bar empfehlenswert.

Für die technische Herstellung des Isobutylenpolymerisats in Polymerisationszonen sind Apperate üblich, die mit Vorrichtungen zum Mischen des Monomeren allein oder in Lösung mit dem Katalysator als solchem oder in Lösung und zum Kühlen zwecks Abführung der Polymerisationswärme versehen sind. Sie arbeiten diskontinuierlich, halbkontinuierlich oder kontinuierlich. Ein Überblick über die üblichen Verfahren wird von H. Güterbock in der eingangs zitierten Monographie, Seiten 91 ff gegeben. Bevorzugt ist die Polymerisationszone als Rohrreaktor oder Bandpolymerisation ausgestaltet, der eine Länge von 0,5 bis 800 m und wegen einer besseren Wärmeabführung einen relativ dünnen Innendurchmesser von 0,1 bis 10 cm aufweist (vgl. EP-A1-16 312). Aus praktischen Gründen ist es zweckmäßig, das Rohr spiralig aufzuwendeln und in einem Kühlbad anzuordnen. Zur Vergrößerung der Wärmeaustauschfläche kann auch ein Rohrbündel verwendet werden.

Die Polymerisation zu Isobutylenpolymerisaten soll unter einem Druck von 0,2 bis 20, bevorzugt 0,7 bis 10 bar und bei Temperaturen zwischen -130 und +60°C, bevorzugt -110 und +20°C erfolgen. Derartige Druck- und Temperatureinstellungen sind üblich, so daß sich eine weitere Erläuterung erübrigt.

Als Katalysator für die Initiierung der Isobutylenhomo- bzw. -copolymerisation werden Borhalogenide, insbesondere $BCl_3$ und $BF_3$, verwendet. Insbesondere geeignet ist das Bortrifluorid, $BF_3$, das technisch durch Erhitzen von Borsäureanhydrid, Flußspat, Schwefelsäure und Oleum im gußeisernen Rührkessel hergestellt werden kann (vgl. GB-Patent 324 016). Es kann auch ein von Fremdbestandteilen gereinigtes Bortrifluorid verwendet werden (vgl. US-Patent 4 391 959). Bezogen auf ein Mol des eingesetzten Monomer, z.B. bei der Homopolymerisation auf ein Mol Isobutylen, werden 0,01 bis 20 Millimol (mMol), bevorzugt 0,1 bis 5 Millimol Borhalogenid, bevorzugt Bortrifluorid, bei der Polymerisation verwendet. Der Einsatz von Borhalogenidkatalysatoren bei der Polymerisation von Isobutylen ist üblich und seit langem bekannt.

Als Katalysatoren für die Isobutylenpolymerisation zu hochmolekularen Polymeren eignen sich bei Anwendung von Borhalogeniden, insbesondere von Bortrifluorid, verschiedene organische Verbindungen als Katalysator-Hilfe. Derartige Zusätze werden als Cokatalysatoren bezeichnet, weil sie das Molekulargewicht beeinflussen und die Polymerisationsgeschwindigkeit erhöhen können. Außer den eingangs genannten Verbindungsklassen sind als Cokatalysatoren Verbindungen wie organische Sulfide, Schwefelkohlenstoff, organische Ether wie Alkyl- oder Isopropylether, Isopropylacetat, Methylpropylketon etc. bekannt (vgl. H. Güterbock, "Polyisobutylen und Isobutylen-Mischpolymerisate", Springer-Verlag Berlin/Göttingen/Heidelberg, 1959, Seite 88) . Die Cokatalysatoren werden in solchen Mengen eingesetzt, daß das molare Verhältnis von Borhalogenid zum Cokatalysator 0,5 bis 200, bevorzugt 1,0 bis 100 beträgt.

Bei Anwendung von Borhalogenidkatalysatoren zur Polymerisation von Isobutylen wird üblicherweise außer den Cokatalysatoren gegebenenfalls noch in Gegenwart von sog. Polymerisationsbeschleunigern polymerisiert, die eine Beschleunigung des Reaktionsablaufs und eine Verringerung der Katalysatormenge sowie eine Erniedrigung des Molekulargewichts bewirken. Für diesen Zweck werden außer den eingangs genannten Verbindungen Mineralölsäuren, organische Carbonsäuren, Formaldehyd, Wasser etc. eingesetzt (vgl. Monographie von H. Güterbock, Seite 87). Bei dem erfindungsgemäßen Verfahren sind als Polymerisationsbeschleuniger Wasser, Alkohole und Phenole wie Isobutanol, Propanole, Benzylalkohol, Phenol oder Kresol bevorzugt, insbesondere ist das Isobutanol geeignet. Die Polymerisationsbeschleuniger werden gegebenenfalls in solchen Mengen angewendet, daß das molare Verhältnis von Borhalogenid zum Polymerisationsbeschleuniger 0,5 bis 200, bevorzugt 1,0 bis 100 beträgt. Da auch die Cokatalysatoren die Polymerisation von Isobutylen in bezug auf Molekulargewicht beeinflussen, sind die Polymerisationsbeschleuniger nur gegebenenfalls im Katalysatorkomplex vorhanden. Auf die Polymerisationsbeschleuniger kann verzichtet werden, wenn man höhere Katalysator- oder Cokatalysatormengen in Kauf nimmt.

Die Polymerisation des Isobutylens kann in Gegenwart von 0 bis 90 Gew.%, bezogen auf das Gewicht des Gemischs aus Monomer und Lösungsmittel, eines unter Reaktionsbedingungen weitgehend inerten Lösungsmittels vorgenommen werden. Als Lösungsmittel besonders geeignet sind $C_4$- bis $C_6$-Alkane oder

deren Gemische mit $C_4$- $C_6$-Alkenen. Bei Anwendung eines Lösungsmittels ist eine Menge von 30 bis 80 Gew.% bevorzugt.

Bei der Polymerisation des Isobutylens tritt eine sehr kräftige Wärmetönung auf, die entweder durch Innen- oder Außenkühlung oder durch Siedekühlung nach bekannten Verfahrensprinzipien abgeführt werden muß.

Nach erfindungsgemäßen Verfahren wird als Cokatalysator ein Carbonsäureanhydrid oder Carbonsäurehalogenid verwendet. Bevorzugt sind hierbei ein aliphatisches oder aromatisches, gegebenenfalls halogen-substituiertes $C_4$- bis $C_{18}$-Carbonsäureanhydrid bzw. ein aliphatisches oder aromatisches, gegebenenfalls halogensubstituiertes $C_2$- bis $C_{12}$-Carbonsäurehalogenid. Derartige Verbindungen sind aus der organischen Chemie so bekannt, daß sich eine Beschreibung der Herstellung erübrigt. Insbesondere bevorzugt als Cokatalysatoren sind die Verbindungen Essigsäure-, Trifluoressigsäure-, Trichloressigsäure-, Benzoesäure-, Phthalsäure-, Bernsteinsäure-, Pivalinsäure-, Maleinsäure-, (Meth)acrylsäureanhydrid oder Acetylfluorid, Acetylchlorid, Acetylbromid, Benzoylchlorid, Pivalylchlorid oder Acrylchlorid. Bevorzugt soll das molare Verhältnis von Borhalogenid zum Cokatalysator 1,1 bis 100 betragen.

Da Wasser, Alkohole und Säuren die Carbonsäureanhydride bzw. -chloride zersetzen bzw. verändern können, sollten sie vor der Polymerisation ganz oder bis auf die gewünschte Beschleunigermenge aus den Einsatzstoffen entfernt werden. Das Katalysatorsystem kann als fertiges System dosiert oder im Monomeren unmittelbar zur Polymerisation erzeugt werden. Es empfiehlt sich jedoch eine Polymerisation mit einer Herstellung der Katalysatorsysteme in situ, da die Komplexe zum Teil schwer lösliche Festtoffe darstellen.

Für die Polymerisation ist ein molarer Borhalogenidüberschuß vorteilhaft. Bevorzugt ist ein molares Verhältnis von Borhalogenid:Anhydrid von 1,1 bis 100, aber auch Molverhältnisse von 0,5 und 200 sind praktikabel. Bei Molverhältnissen kleiner als 1,1 steigt der Katalysatorbedarf stark an. Das Molekulargewicht der erhaltenen Polymerisate läßt sich über weite Bereiche mit Menge und Molverhältnis des Katalysatorsystems steuern. So erhält man bei Null °C Molekulargewichte zwischen 500 und 5000. Die dafür notwendige Borhalogenidmenge liegt zwischen 0,01 und 20 mMol pro Mol Isobutylen.

Die mit der Erfindung erzielten Vorteile sind insbesondere darin zu sehen, daß bei der Herstellung niedermolekularer Isobutylenpolymerisate der Molgewichte von 500 bis 5000 Polymere mit einem geringen Oligomerenanteil erhalten werden können. Ein weiterer Vorteil ist der geringe Verbrauch von Borhalogenid, auch die Möglichkeit der Polymersynthese bei nicht so tiefen Temperaturen wie üblich bereitet wirtschaftliche Vorteile. Es ist auch ein Vorteil, daß nach erfindungsgemäßen Verfahren die mittlere Polymerisationsdauer auf 5 bis 120 Sekunden begrenzt werden kann.

Beispiele 1 bis 6

Zur Prüfung der Katalysatorsysteme hinsichtlich Produktivität und regelnder Wirkung wird ein Gemisch aus gleichen Teilen Buten-2 und Isobutylen in einem Rohrreaktor von 10 m Länge und einem Innendurchmesser von 3 mm bei 20°C und 3,5 bar mit $BF_3$ polymerisiert, entspannt und neutralisiert. Dazu wird das Butengemisch mit 0,1 mMol Säureanhydrid und 0,1 mMol Isobutanol pro Mol Isobutylen versetzt und danach mit $BF_3$ über eine Mischdüse in den Rohrreaktor gedrückt. Die dosierte Butenmenge beträgt dabei 6 kg/h, die $BF_3$-Menge 1,0 mMol/Mol Isobutylen. Die Kühlung des Reaktors erfolgt mit Wasser von 20°C, die Verweilzeit beträgt 30''. Der Abbruch erfolgt am Ende des Rohrreaktors auch Entspannung und Wäsche mit verdünnter Natronlauge. Das unumgesetzte Flüssiggas wird bei -80°C kondensiert und auf Isobutylen untersucht, das Polyisobutylen von Oligomeren bei 200°C und 3 mbar befreit und die Viskosität des verbleibenden Öls bestimmt. Der Umsatz ist Maß für die Produktivität, die Viskosität Maß für die Reaktivität und regelnde Wirkung des Katalysatorsystems.

| Beispiel | Zusatz | Umsatz Gew.% | Viskosität mm²/S (nach ASTM-D 445) |
|---|---|---|---|
| 1 | Essigsäureanhydrid | 99 | 170 |
| 2 | Trifluoressigsäureanhydrid | 97 | 285 |
| 3 | Maleinsäureanhydrid | 99 | 350 |
| 4 | Acetylchlorid | 90 | 265 |
| 5 | Benzoesäureanhydrid | 95 | 425 |
| 6 | Pivalinsäureanhydrid | 96 | 480 |

**Patentansprüche**

1. Verfahren zur Herstellung von Isobutylenpolymerisaten durch Homopolymerisation von Isobutylen oder Copolymerisation von Isobutylen mit Isobutylen copolymerisierbaren olefinisch ungesättigten Verbindungen in flüssiger Phase in einer Polymerisationszone in der ein Druck von 0,2 bis 20 bar und eine Temperatur von -130 bis +60°C herrscht in Gegenwart von 0,01 bis 20 mMol, bezogen auf ein Mol des eingesetzten Monomeren, eines Borhalogenidkatalysators und in Gegenwart eines Cokatalysators und gegebenenfalls eines Polymerisationsbeschleunigers, wobei das molare Verhältnis von Borhalogenid zum Cokatalysator und gegebenenfalls zum Polymerisationsbeschleuniger jeweils 0,5 bis 200 ist, sowie in Gegenwart von 0 bis 90 Gew.%, bezogen auf das Gewicht des Gemischs aus Monomer und Lösungsmittel, eines unter Reaktionsbedingungen inerten Lösungsmittels unter Abführung der Polymerisationswärme durch Kühlung, dadurch gekennzeichnet, daß als Cokatalysator ein Carbonsäureanhydrid oder -halogenid eingesetzt wird.

2. Verfahren nach Anspruch 1, dadurch gekennzeichnet, daß als Cokatalysator ein aliphatisches oder aromatisches, gegebenenfalls halogensubstituiertes $C_4$- bis $C_{18}$-Carbonsäureanhydrid bzw. $C_2$- bis $C_{12}$-Carbonsäurehalogenid eingesetzt wird.

3. Verfahren nach Anspruch 1, dadurch gekennzeichnet, daß als Cokatalysator Essigsäure-, Trifluoressigsäure-, Trichloressigsäure-, Benzoesäure-, Phthalsäure-, Bernsteinsäure-, Pivalinsäure-, Maleinsäure-, (Meth)acrylsäureanhydrid oder Acetylfluorid, Acetylchlorid, Acetylbromid, Benzoylchlorid, Pivalylchlorid oder Acrylchlorid eingesetzt wird.

## Claims

1. A process for preparing isobutylene polymers by homopolymerizing isobutylene or copolymerizing isobutylene with olefinically unsaturated compounds which are copolymerizable with isobutylene, in liquid phase in a polymerization zone in which a pressure of from 0.2 to 20 bar and a temperature of from -130 to +60°C prevail in the presence of from 0.01 to 20 mmol per mol of starting monomer of a boron halide catalyst and in the presence of a cocatalyst the presencepropriate of a polymerization accelerant, the molar ratio of boron halide to the cocatalyst and where appropriate to the polymerization accelerant being in each case from 0.5 to 200, and in the presence of from 0 to 90% by weight, based on the weight of the mixture of monomer and solvent, of a solvent which is inert under reaction conditions, with dissipation of the heat of polymerization by cooling which comprises using as the cocatalyst a carboxylic anhydride or carbonyl halide.

2. A process as claimed in claim 1, wherein the cocatalyst used is an aliphatic or aromatic, unsubstituted or halogen-substituted $C_4$-$C_{18}$-carboxylic anhydride or $C_2$-$C_{12}$-carbonyl halide.

3. A process as claimed in claim 1, wherein the cocatalyst used is acetic anhydride, trifluoroacetic anhydride, trichloroacetic anhydride, benzoic anhydride, phthalic anhydride, succinic anhydride, pivalic anhydride, maleic anhydride, (meth)acrylic anhydride or acetyl fluoride, acetyl chloride, acetyl bromide, benzoyl chloride, pivaloyl chloride or acryloyl chloride.

## Revendications

1. Procédé de préparation de polymères de l'isobutène par homopolymérisation de l'isobutène ou par copolymérisation de l'isobutène avec des composés oléfiniquement insaturés copolymérisables avec l'isobutène, en phase liquide, dans une zone de polymérisation, dans laquelle règnent une pression de 0,2 à 20 bar et une température de -130 à +60°C, en présence de 0,01 à 20 mmoles, par rapport à une mole du monomère mis en oeuvre, d'un catalyseur qui est un halogénure de bore et en présence d'un co-catalyseur et éventuellement d'un accélérateur de polymérisation, le rapport molaire de l'halogénure de bore au co-catalyseur et éventuellement à l'accélérateur de polymérisation étant dans chaque cas de 0,5 à 200, ainsi qu'en présence de 0 à 90% en poids, par rapport au poids du mélange de monomère et de solvant, d'un solvant inerte dans les conditions de la réaction et avec dissipation par refroidissement de la chaleur de polymérisation, caractérisé en ce que l'on utilise comme co-catalyseur un anhydride ou un halogénure d'acide carboxylique.

2. Procédé suivant la revendication 1, caractérisé en ce que l'on utilise, comme co-catalyseur, un anhydride d'acide carboxylique en $C_4$-$C_{18}$ ou bien un halogénure d'acide carboxylique en $C_2$-$C_{12}$, aliphatique ou aromatique, éventuellement substitué par des halogènes.

3. Procédé suivant la revendication 1, caractérisé en ce que l'on utilise, comme co-catalyseur, l'anhydride d'acide acétique, d'acide trifluoroacétique, d'acide trichloroacétique, d'acide benzoïque, d'acide phtalique, d'acide succinique, d'acide pivalique, d'acide maléique, d'acide (méth)acrylique, ou bien le fluorure d'acétyle, le chlorure d'acétyle, le bromure d'acétyle, le chlorure de benzoyle, le chlorure de pivalyle ou le chlorure d'acryle.